# EUROPÄISCHE PATENTSCHRIFT

(11) **EP 4 409 198 B1**
(45) Veröffentlichungstag und Bekanntmachung des Hinweises auf die Patenterteilung: **23.07.2025**
(21) Anmeldenummer: 22793434.6
(22) Anmeldetag: 27.09.2022
(51) Int. Cl.: F21V 5/00, F21V 5/04, G02B 19/00, F21W 131/202, F21Y 115/10, F21W 131/205

(54) **MEDIZINISCHE LEUCHTE**
MEDICAL LAMP
LUMINAIRE MÉDICALE

(30) Priorität: 28.09.2021 EP 21199315
(43) Veröffentlichungstag der Anmeldung: 07.08.2024
(73) Patentinhaber: KaVo Dental GmbH, 88400 Biberach an der Riss (DE)
(72) Erfinder: SCHUMACHER, Volker, 88339 Bad Waldsee (DE); RUSCHKE, Immanuel, 88255 Baindt (DE); HACKEL, André, 88400 Biberach (DE)
(74) Vertreter: Thun, Clemens
(86) Internationale Anmeldenummer: PCT/EP2022/076753
(87) Internationale Veröffentlichungsnummer: WO 2023/052321

(56) Entgegenhaltungen:
- EP-A1- 0 391 287
- EP-A2- 2 469 159
- US-A1- 2007 147 041

## Beschreibung

Die vorliegende Erfindung betrifft eine medizinische Leuchte, insbesondere eine zahnärztliche Behandlungsleuchte, mit deren Hilfe das intraorale Ausleuchten eines Operationsfelds erfolgt.

Um die Qualität von medizinischen Behandlungen zu gewährleisten, ist es unerlässlich, dass die Untersuchungs- oder Behandlungsstelle hinreichend ausgeleuchtet wird. Medizinische Behandlungsleuchten sind dementsprechend dazu ausgebildet, die zu untersuchende oder zu behandelnde Stelle mit einem optimierten Lichtfeld zu beleuchten, welches die Untersuchung und/oder Behandlung unterstützt.

Im Falle von zahnärztlichen Leuchten werden die Eigenschaften dieses Lichtfelds durch unterschiedliche Normen festgelegt. Eine hiervon ist die EN ISO 9680, welche bspw. vorsieht, dass der Farbwiedergabeindex (CRI, Color Rendering Index) größer als 85 ist, eine Mindestbeleuchtungsstärke von 15000 Lux vorliegt und das Lichtfeld eine Farbtemperatur zwischen 3600 und 6400 Kelvin aufweist. Darüber hinaus ist zur Vermeidung von Irritationen oder sogar Augenschäden des Patienten vorgesehen, dass das Lichtfeld in Randbereichen hinreichend stark abfällt, sodass in der Objektebene ein streng begrenzter Raum um die Behandlungsstelle beleuchtet wird.

Eine Leuchte, welche die oben genannten Anforderungen erfüllt, ist bspw. aus der EP 2 469 159 B1 der Anmelderin bekannt. Diese Leuchte weist mehrere Leuchteinheiten mit jeweils einer eigenen Lichtquelle sowie einer eigenen Optik auf. Das Licht der mit Hilfe von mehreren LEDs realisierten Lichtquelle einer Leuchteinheit wird über die Optik derart beeinflusst, dass in einem bestimmten Abstand vor der Leuchte, in der sog. Objektebene, ein vorgegebener, in der Regel etwa sechseckiger Bereich beleuchtet wird. Die mehreren Beleuchtungseinheiten dieser bekannten Leuchte sind nunmehr derart ausgeführt und positioniert, dass sie alle gemeinsam den entsprechenden Bereich in der Objektebene beleuchten, sodass insgesamt gesehen ein homogen ausgeleuchtetes Lichtfeld entsteht. Wird dabei das Licht einer einzelnen Leuchteinheit bspw. durch einen Arm eines Arztes oder anderweitig abgeschattet, so erfolgt die Ausleuchtung des Lichtfelds nach wie vor durch die weiteren, nicht abgeschatteten Beleuchtungseinheiten. Hierdurch ist gewährleistet, dass eine weitestgehend schattenfreie Ausleuchtung des zu untersuchenden Bereichs erzielt wird.

Die oben beschriebene bekannte Leuchte hat sich in der Praxis vielfach bewährt. Allerdings ist die Herstellung dieser Leuchte mit einer verhältnismäßig aufwendigen Montage der einzelnen Komponenten verbunden, da zum Erzielen eines homogen ausgeleuchteten Lichtfelds eine exakte Ausrichtung der einzelnen Leuchteinheiten zueinander erforderlich ist. Abweichungen hiervon würden dazu führen, dass im Randbereich des Lichtfelds Helligkeits- oder Farbveränderungen auftreten, die unerwünscht sind.

Ein weiteres Problem besteht darin, dass die aufeinander abgestimmte Ausrichtung der einzelnen Beleuchtungseinheiten dazu führt, dass sich die entsprechenden Strahlenbündel nur in einem fest definierten Abstand von der Leuchte exakt überlagern. Die gewünschte homogene Ausleuchtung des Lichtfelds wird also primär in einer bestimmten Ebene vor der Leuchte erhalten. Wird hingegen von diesem IdealAbstand abgewichen, so fällt die Qualität des Lichtfelds ab.

In der Regel ist tatsächlich vorgesehen, die Leuchte in einem fest vorgegebenen Abstand von dem zu untersuchenden Bereich zu platzieren. Dies ist allerdings nicht immer möglich und es wäre dementsprechend wünschenswert, wenn die Qualität des Lichtfelds weniger stark vom Abstand der Leuchte zu dem zu beleuchtenden Bereich abhängen würde.

Aus der US 2007/0147041 A1 ist ferner eine Leuchte für allgemeine Beleuchtungszwecke bekannt, bei der das Licht einer Lichtquelle zur gleichmäßigen Ausleuchtung eines Lichtfelds verwendet wird. In diesem Fall besteht das zum Einsatz kommende optische System aus einem plattenartigen Kollimator sowie einer dem Kollimator nachgeordneten Platte, welche mit linsenartigen Strukturen versehen ist, wodurch insgesamt ein verhältnismäßig einfacher Aufbau erzielt wird, mit dessen Hilfe ein symmetrisch ausgeleuchtetes Lichtfeld erzielt wird.

Wie eingangs erwähnt sollte das Lichtfeld verhältnismäßig streng begrenzt sein, um bspw. ein Blenden eines zu untersuchenden Patienten zu vermeiden. D.h., eine Ausleuchtung sollte tatsächlich nur innerhalb eines bestimmten, vorgegebenen Bereichs erfolgen, der umgebende Bereich hingegen sollte nicht beleuchtet werden. Allerdings hat sich gezeigt, dass zu starke Helligkeitsunterschiede sich ermüdend auf einen Beobachter auswirken können, da hierdurch die Adaptionsfunktion des menschlichen Auges übermäßig beansprucht wird.

Der vorliegenden Erfindung liegt die Aufgabenstellung zugrunde, eine medizinische Leuchte zur Verfügung zu stellen, die im Hinblick auf die oben genannten Aspekte optimiert ist.

Die Aufgabe wird durch eine medizinische Leuchte, insbesondere eine zahnärztliche Behandlungsleuchte, welche die Merkmale des Anspruchs 1 aufweist, gelöst. Vorteilhafte Weiterbildungen der Erfindung sind Gegenstand der abhängigen Ansprüche.

Ein wesentlicher Unterschied der erfindungsgemäßen Leuchte gegenüber der aus der EP 2 469 159 B1 bekannten Lösung besteht darin, dass die Leuchte nunmehr eine einzelne Beleuchtungseinheit aufweist mit einer einzigen, im Wesentlichen punktförmigen LED-Lichtquelle. Es kann sich hierbei um eine Einzel-LED oder um ein kompaktes LED-Cluster handeln. Allerdings sind nicht mehrere Beleuchtungseinheiten vorgesehen, die dann wie oben erläutert aufwändig montiert und aufeinander abgestimmt ausgerichtet werden müssen, um eine effiziente und gleichmäßige Beleuchtung eines Lichtfelds zu erzielen. Stattdessen wird das von der einzelnen punktförmigen LED-Lichtquelle abgegebene Licht mit Hilfe optischer Mittel in besonderer Weise beeinflusst, um eine homogene und gleichmäßige Ausleuchtung eines Lichtfelds zu erzielen, die dann allerdings weniger stark von dem Abstand des zu beleuchtenden Bereichs zu der Leuchte abhängig ist. Die optischen Mittel weisen hierbei einen Kollimator sowie eine Abdeckscheibe auf, wobei beide Komponenten in bestimmter Weise mit lichtlenkenden Strukturen und Komponenten versehen sind, um bei einer kompakten Bauweise trotz allem eine optimierte Ausleuchtung des Lichtfelds zu ermöglichen.

Ferner ist abweichend von der Lösung der EP 2 469 159 B1 oder auch der US 2007/0147041 A1 vorgesehen, den Helligkeitsgradienten im Randbereich des Lichtfelds, welches ansonsten wie bereits erwähnt homogen ausgeleuchtet werden sollte, zusätzlich zu beeinflussen. Hierbei sind die optischen Mittel derart ausgeführt, dass das Lichtfeld in einer Richtung asymmetrisch aufgeweitet wird.

Gemäß der vorliegenden Erfindung wird also eine medizinische, insbesondere eine zahnärztliche Behandlungsleuchte für das intraorale Ausleuchten eines Operationsfelds vorgeschlagen, welche eine Beleuchtungseinheit mit Leuchtmitteln und optischen Mitteln zur Erzeugung eines Lichtfelds in einer Objektebene aufweist. Die Leuchtmittel sind hierbei durch eine im Wesentlichen punktförmige LED-Lichtquelle gebildet und die optischen Mittel weisen einen plattenartigen Kollimator sowie eine Abdeckscheibe auf,
- wobei der Kollimator einen zentralen Bereich, der auf einer der LED-Lichtquelle abgewandten Seite mit lichtbrechenden Strukturen versehen ist, sowie einen den zentralen Bereich umgebenden äußeren Bereich aufweist, der auf einer der LED-Lichtquelle zugewandten Seite mit zur Totalreflexion ausgebildeten Strukturen versehen ist, und
- wobei die Abdeckscheibe mit einer Linsenstruktur versehen ist, welche eine Vielzahl von Einzellinsen aufweist, die dazu ausgebildet sind, das von dem Kollimator abgegebene und in die Linsen eintretende Licht jeweils auf die Objektebene zu projizieren.

Dabei ist die der LED-Lichtquelle zugewandte Rückseite des zentralen Bereichs des Kollimators mit Teilflächen versehen, welche in Bezug zu einer Ebene des Kollimators und damit zur Objektebene eine Neigung aufweisen, um das Lichtfeld in einer Richtung asymmetrisch aufzuweiten.

Beide Komponenten des optischen Systems sind also in spezieller Weise ausgestaltet, um in optimierter Weise das von der LED-Lichtquelle abgegebene Licht zu beeinflussen. Die erfindungsgemäße Ausgestaltung des Kollimators berücksichtigt hierbei, dass die spektrale Zusammensetzung des von einer Weißlicht-LED-Lichtquelle abgegebene Licht von dem Winkel abhängig ist, unter dem das Licht abgestrahlt wird. Es ist ein bekanntes Phänomen von Weißlicht-LEDs, dass Licht, welches im Wesentlichen senkrecht zur Oberfläche der LED abgestrahlt wird, in der Regel eine höhere Farbtemperatur, also einen leicht bläulichen Anteil aufweist, während hingegen stark seitlich abgegebenes Licht eine niedrigere Farbtemperatur aufweist und dementsprechend leicht gelblich erscheint. Die erfindungsgemäße Ausgestaltung des Kollimators trägt diesem Effekt Rechnung und sorgt dafür, dass einerseits ein zentrales Lichtfeld gebildet wird, welches auf das im Wesentlichen senkrecht von der LED-Lichtquelle abgegebene Licht zurückzuführen ist, sowie andererseits ein äußeres Lichtfeld, welches durch das seitlich von der LED-Lichtquelle abgebebene Licht gebildet ist. Durch eine entsprechende Überlagerung aus zentralem und äußerem Lichtfeld, welche durch die Ausgestaltung der Abdeckscheibe erzielt wird, wird letztendlich sichergestellt, dass das endgültige Lichtfeld tatsächlich gleichmäßig homogen beleuchtet wird und keine Farb- bzw. Farbtemperatur Veränderungen im Randbereich auftreten. Gleichzeitig gewährleistet die Verwendung einer einzelnen Lichtquelle in Kombination mit dem erfindungsgemäß ausgestalteten optischen System, dass die gleichmäßige Ausleuchtung des Lichtfelds weniger stark vom Abstand zur Leuchte abhängig ist, weshalb die oben beschriebenen, im Stand der Technik bekannten Probleme vermieden werden.

Die erfindungsgemäße asymmetrische Aufweitung des Lichtfelds führt ferner dazu, dass beispielsweise der Helligkeitsgradient am oberen und unteren Rand des Lichtfelds beeinflusst wird, wobei insbesondere im unteren Bereich der Helligkeitsabfall im Randbereich schwächer ausgeprägt ist und dementsprechend weniger starke Helligkeitskontraste auftreten als im gegenüberliegenden Randbereich. Nach wie vor wird also eine unerwünschte Blendung eines Patienten am oberen Randbereich des Lichtfelds vermieden werden, da hier eine scharfe Abgrenzung des beleuchteten Bereichs gegenüber der Umgebung vorliegt. Gleichzeitig werden im gegenüberliegenden Randbereich allzu starke Kontraste vermieden, wodurch Ermüdungserscheinungen für einen Beobachter, beispielsweise für den behandelnden Arzt, reduziert werden.

Die asymmetrische Aufweitung des Lichtfelds wird also dadurch erhalten, dass die der LED-Lichtquelle zugewandte Rückseite des zentralen Bereichs des Kollimators mit Teilflächen versehen ist, welche im Vergleich zu der Ebene des Kollimators und damit zur Objektebene eine Neigung aufweisen.

Insbesondere kann vorgesehen sein, dass zumindest einige der Teilflächen, vorzugsweise alle, jeweils um eine Achse gekippt sind, welche in der Ebene (E3) des Kollimators (40) liegt und im Wesentlichen senkrecht zur Richtung der asymmetrischen Aufweitung steht. Eine alternative oder ergänzende Möglichkeit, um die asymmetrische Aufweitung des Lichtfelds zu erzielen, kann ferner darin bestehen, dass zumindest einige der die Linsenstruktur bildenden Linsen bezüglich der Ebene des Kollimators um eine Achse gekippt sind, welche im Wesentlichen senkrecht zur Richtung der asymmetrischen Aufweitung ausgerichtet ist.

Vorzugsweise ist vorgesehen, dass die Teilflächen durch streifenförmige Flächenbereiche gebildet sind, welche sich jeweils im Wesentlichen senkrecht zur Richtung der asymmetrischen Aufweitung entlang ihrer jeweiligen Kippachse erstrecken. Dabei kann ferner vorgesehen sein, dass die streifenförmigen Flächenbereiche bezüglich der Richtung der asymmetrischen Aufweitung konkav gewölbt sind, wobei die streifenförmigen Flächenbereiche besonders bevorzugt jeweils bezüglich einer Ebene, welche senkrecht zur Ebene des Kollimators steht und durch eine parallel zur Richtung der asymmetrischen Aufweitung verlaufende Achse aufgespannt wird, symmetrisch ausgebildet sind. Diese Maßnahme führt dazu, dass in der Breite gesehen eine gewisse, nunmehr allerdings symmetrische Aufweitung des Lichtfeldes erzielt wird.

Alternativ zu den streifenförmigen Teilflächen wäre auch denkbar, dass die Teilflächen kachelförmige Teilflächen sind, welche die der LED-Lichtquelle zugewandte Rückseite des zentralen Bereichs des Kollimators matrixartig bedecken. Dabei kann dann analog zu der oben erwähnten konkaven Ausgestaltung der kachelförmigen Teilflächen vorgesehen sein, dass zumindest einige der kachelförmigen Teilflächen bezüglich der Ebene des Kollimators um eine Achse, welche parallel zur Richtung der asymmetrischen Aufweitung verläuft, gekippt sind, wobei insbesondere die Mehrzahl der kachelförmigen Teilflächen bezüglich einer Ebene, welche senkrecht zur Ebene des Kollimators steht und durch eine parallel zur Richtung der asymmetrischen Aufweitung verlaufende Achse aufgespannt wird, symmetrisch angeordnet sind. Wiederum führt diese Maßnahme dazu, dass in der Breite gesehen eine gewisse Aufweitung des Lichtfeldes erzielt wird.

Die lichtbrechenden Strukturen des zentralen Bereichs des Kollimators bilden vorzugsweise eine sog. Fresnel-Struktur. Ferner ist vorzugsweise vorgesehen, dass die zur Totalreflexion ausgebildeten Strukturen des Kollimators eine der LED-Lichtquelle zugewandte weitere Fresnel-Struktur bilden, welche in einer Projektion senkrecht zur Ebene des Kollimators den zentralen Bereich ringartig umgibt. Diese Ausgestaltung der Strukturen des Kollimators ermöglicht es, diesen im Prinzip scheibenartig auszugestalten und trotz allem in effizienter Weise das Licht der LED-Lichtquelle zu beeinflussen. Hierdurch wird eine kompakte Bauweise der gesamten Beleuchtungseinheit ermöglicht. Die lichtbrechenden Strukturen des zentralen Bereichs und die zur Totalreflexion ausgebildeten Strukturen des äußeren Bereichs des Kollimators können hierbei vorzugsweise eine gemeinsame Rotationssymmetrie aufweisen. Vorzugsweise ist vorgesehen, dass diese Strukturen asphärische Flächenbereiche bilden.

Die Linsen der erfindungsgemäß ebenfalls verwendeten Abdeckscheibe sind vorzugsweise auf einer der LED-Lichtquelle zugewandten Seite der Abdeckscheibe angeordnet. Insbesondere kann für den Fall, dass die Abdeckscheibe eine Außenfläche der Leuchte bildet, vorgesehen sein, dass die der LED-Lichtquelle abgewandte Seite der Abdeckscheibe glatt ausgeführt ist. Dies verhindert insbesondere ein Ansetzen von Schmutzpartikeln an der Oberfläche der Leuchte und erleichtert somit deren Reinigung.

Analog zum Kollimator kann auch die Linsenstruktur der Abdeckscheibe einen inneren Bereich sowie einen äußeren Bereich aufweisen, wobei
- Linsen des inneren Bereichs dazu ausgebildet sind, das von dem zentralen Bereich des Kollimators abgegebene Licht in Form eines zentralen Lichtfelds auf die Objektebene zu projizieren,
- Linsen des äußeren Bereichs dazu ausgebildet sind, das von dem äußeren Bereich des Kollimators abgegebene Licht in Form eines äußeren Lichtfelds auf die Objektebene zu projizieren,
und wobei sich zentrales Lichtfeld und äußeres Lichtfeld vorzugsweise im Wesentlichen vollständig überlagern. Insbesondere kann hierbei vorgesehen sein, dass jede Einzellinse des inneren oder äußeren Bereichs jeweils vollständig das entsprechende zentrale bzw. äußere Lichtfeld projiziert. Diese Maßnahme führt wiederum dazu, dass für den Fall, dass ein Teil des über die Abdeckscheibe der Leuchte abgegebenen Lichts abgeschattet wird, beispielsweise durch einen Arm oder den Kopf des behandelnden Arztes, trotz allem eine vollständige und nach wie vor im Wesentlichen homogene Ausleuchtung des gewünschten Bereichs erzielt wird.

Die Linsen des inneren Bereichs können hierbei im Wesentlichen quadratisch sein, während hingegen die Linsen des äußeren Bereichs in Richtung einer Achse des Kollimators, welche senkrecht zur Richtung der asymmetrischen Aufweitung verläuft, eine größere Erstreckung aufweisen als in einer parallel zur Richtung der asymmetrischen Aufweitung verlaufenden Achse.

Letztendlich wird also mit Hilfe der vorliegenden Erfindung eine Leuchte zur Verfügung gestellt, welche eine optimierte Beleuchtung eines Behandlungsbereichs ermöglicht, wobei allerdings die Licht-abgebende Einheit der Leuchte verhältnismäßig wenige Komponenten aufweist, was zu einer vereinfachten Herstellung und Montage der Leuchte insgesamt führt. Insbesondere wird jedoch der Vorteil erhalten, dass die Qualität der Ausleuchtung des Lichtfelds weniger stark vom Abstand zur Leuchte abhängig ist.

Nachfolgend soll die Erfindung anhand der beiliegenden Zeichnung näher erläutert werden. Es zeigen:
- Figur 1: eine perspektivische Ansicht einer medizinischen Leuchte, bei der die erfindungsgemäße ausgestaltete Beleuchtungseinheit zum Einsatz kommt;
- Figur 2: schematisch das mit Hilfe der erfindungsgemäßen Leuchte erzielbare Lichtfeld;
- Figur 3: eine Darstellung der verschiedenen Komponenten der Beleuchtungseinheit gemäß einem ersten Ausführungsbeispiel;
- Figur 4: eine vergrößerte Ansicht eines Teilbereichs des Kollimators von Figur 3;
- Figur 5: eine nochmals vergrößerte weitere Darstellung eines Teilbereichs des Kollimators;
- Figur 6: die von der LED-Lichtquelle abgewandte Vorderseite des Kollimators;
- Figur 7: die der LED-Lichtquelle zugewandte Rückseite des Kollimators;
- Figur 8: eine Darstellung der verschiedenen Komponenten der Beleuchtungseinheit gemäß einem zweiten Ausführungsbeispiel;
- Figur 9: eine vergrößerte Ansicht eines Teilbereichs des Kollimators von Figur 8;
- Figuren 10 und 11: weitere Schnittdarstellungen des Kollimators gemäß dem zweiten Ausführungsbeispiel;
- Figur 12: die von der LED-Lichtquelle abgewandte Vorderseite des Kollimators gemäß dem zweiten Ausführungsbeispiel;
- Figur 13: die der LED-Lichtquelle zugewandte Rückseite des Kollimators gemäß dem zweiten Ausführungsbeispiel; und

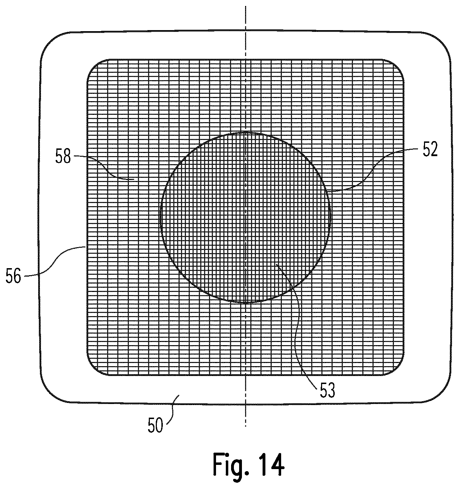

- Figur 14: eine Ansicht der mit der Linsenstruktur versehenen Abdeckscheibe.

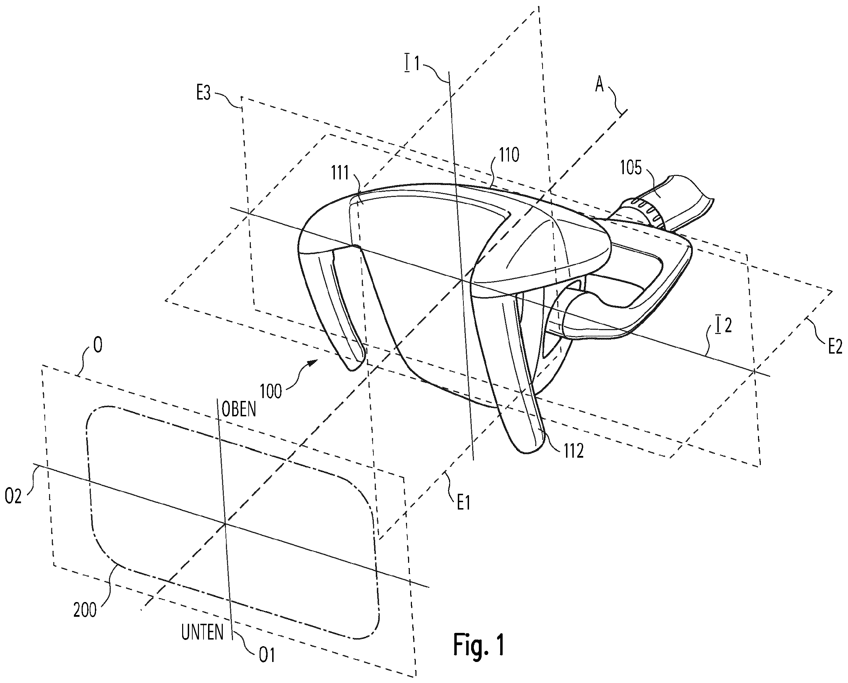

Figur 1 zeigt in perspektivischer Ansicht eine allgemein mit dem Bezugszeichen 100 versehene medizinische Leuchte, insbesondere eine zahnärztliche Behandlungsleuchte, mit deren Hilfe das Operationsfeld eines zahnmedizinischen Arbeitsplatzes ausgeleuchtet werden soll. Die Leuchte 100 ist hierbei in erfindungsgemäßer Weise ausgestaltet, also mit der nachfolgend im Detail beschriebenen Beleuchtungseinheit ausgestattet, wobei allerdings die äußere Form der Leuchte selbstverständlich auch anderweitig gestaltet sein könnte. Die Darstellung in Figur 1 dient hierbei in erster Linie dazu, die Ebenen und Richtungen, auf die bei der späteren Erläuterung der optischen Komponenten der erfindungsgemäßen Beleuchtungseinheit verwiesen wird, zu veranschaulichen.

Grundsätzlich weist die Leuchte 100 einen Leuchtenkopf 110 auf, der an einem nicht näher dargestellten Gelenkarm 105 verstellbar angeordnet ist, derart, dass er in gewünschter Weise auf den Operationsbereich ausgerichtet werden kann. Das Gehäuse 111 des Leuchtenkopfs 110 weist hierbei zu dessen Verstellbarkeit zwei seitliche Griffe 112 auf, durch die ein manuelles Ausrichten der Leuchte 100 ermöglicht ist.

In der Darstellung gemäß Figur 1 wird davon ausgegangen, dass die Ausrichtung des Leuchtenkopfs 110 derart ist, dass Licht im Wesentlichen horizontal entlang einer Achse A, die der Hauptachse des optischen Systems der Leuchte 100 entspricht, auf einen vor der Leuchte 100 befindlichen Bereich gerichtet wird. In dieser Darstellung ist die in Figur 1 gezeigte Ebene E2 horizontal ausgerichtet, senkrecht hierzu und durch die Hauptachse des optischen Systems A verlaufend ist die Ebene E1 dargestellt. Die beiden in den Ebenen E1 und E2 verlaufenden Achsen I1 und I2 sowie die optische Achse A stehen dann jeweils senkrecht aufeinander. Wie bereits erwähnt kann selbstverständlich der Leuchtenkopf 110 während der Nutzung auch derart verschwenkt werden, dass die Ebene E2 nicht horizontal ausgerichtet ist, sondern schräg nach unten bzw. geneigt verläuft. Dies wird insbesondere dann der Fall sein, wenn sich die Leuchte 100 oberhalb eines sich in Liegeposition befindenden Patienten befindet. Für die nachfolgende Erläuterung wird allerdings davon ausgegangen, dass die Ebene E2 horizontal ausgerichtet ist.

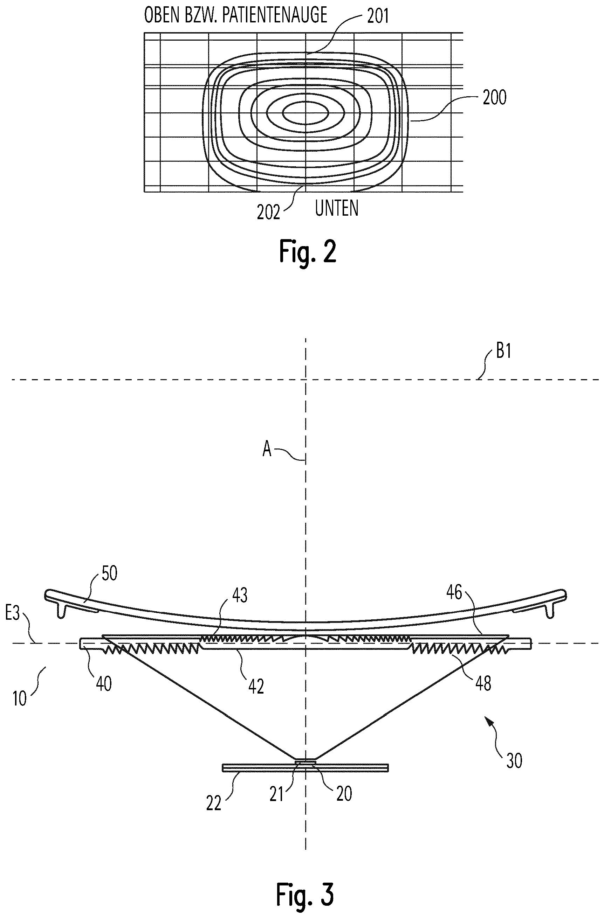

Mit Hilfe der erfindungsgemäßen Leuchte 100 soll dann also in einem bestimmten Bereich vor der Leuchte 100 in der sog. Objektebene O (siehe Figuren 1 und 3) ein schematisch in den Figuren 1 und 2 dargestelltes Lichtfeld 200 erzielt werden. Die Objektebene O ist hierbei parallel zur Ebene E3 des nachfolgend noch näher beschriebenen Kollimators und somit gemeinsam mit dieser senkrecht zur optischen Achse A ausgerichtet, wobei darauf hinzuweisen ist, dass der Abstand zwischen der Ebene E3 des Kollimators E3 und der Objektebene O und somit der Abstand zwischen der Leuchte 100 und dem Lichtfeld 200 in Realität größer sein wird, als dies in den Figuren gezeigt ist. Wie bereits oben erwähnt wird bei den folgenden Erläuterungen der Ausgestaltung der optischen Komponenten der Leuchte 100 davon ausgegangen, dass die optische Achse A horizontal verläuft und dementsprechend die Objektebene O und die Ebene E3 vertikal ausgerichtet sind. Je nach Ausrichtung des Leuchtenkopfs 110 während des tatsächlichen Gebrauchs der Leuchte 100 wird allerdings ggf. die optische Achse A auch eine Neigung aufweisen oder im Extremfall sogar senkrecht nach unten weisen, was dann auch zu einer entsprechenden Änderung der Ausrichtung der verschiedenen Ebenen führt.

Das Lichtfeld 200 weist hierbei eine leicht abgerundete, im Wesentlichen jedoch rechteckige Form auf, wobei sich das Lichtfeld 200 in horizontaler Richtung - entlang der Achse O2 - weiter erstreckt als in vertikaler Richtung entlang der Achse O1. Eine erfindungsgemäße Besonderheit besteht hierbei darin, dass - wie nachfolgend noch näher erläutert - aufgrund der speziellen Ausgestaltung der optischen Mittel die Lichtabgabe der Leuchte 100 in einer Richtung - im dargestellten Beispiel in vertikaler Richtung - asymmetrisch leicht aufgeweitet wird. Wie durch die das Lichtfeld 200 schematisch darstellenden Linien in Figur 2 angedeutet ist, bedeutet dies, dass in seinem oberen Randbereich 201 das Lichtfeld 200 gegenüber der Umgebung stark abgegrenzt ist, hier also ein hoher Helligkeitsgradient beim Übergang vom Lichtfeld 200 zur nicht beleuchteten Umgebung vorliegt. Diese starke Abgrenzung dient wie bereits erwähnt dazu, zu vermeiden, einen zu untersuchenden Patienten zu blenden, was insbesondere bei zahnärztlichen Untersuchungen oder Behandlungen eine wesentliche Rolle spielt. An der gegenüberliegenden Unterseite 202 hingegen ist bevorzugt die Lichtabgabe leicht aufgeweitet, sodass hier geringere Helligkeitsgradienten vorliegen. Das Lichtfeld 200 läuft also zur Unterseite hin sanfter aus, wodurch der Anteil hoher Helligkeitskontraste im gesamten Blickfeld bspw. eines Arztes reduziert wird. Da derart starke Helligkeitskontraste eine letztendlich ermüdende Adaption des menschlichen Auges erfordern, führt diese Maßnahme dazu, dass ein angenehmeres Arbeiten für den Zahnarzt ermöglicht wird. Abgesehen von diesen Randbereichen ist allerdings vorgesehen, das Lichtfeld 200 über seine gesamte Erstreckung hinweg möglichst homogen und gleichmäßig auszuleuchten, wobei dies im Wesentlichen unabhängig vom Abstand zur Leuchte 100 erfolgen soll. Dieser Effekt wird mit Hilfe der erfindungsgemäßen Ausgestaltung der Beleuchtungseinheit erzielt, welche nachfolgend detailliert erläutert werden soll.

Der optische Aufbau der im Inneren der Leuchte 100 vorgesehenen Beleuchtungseinheit 10 gemäß einer ersten Ausführungsform ist in Figur 3 dargestellt. Wesentliche Komponenten sind zunächst die Leuchtmittel 20 in Form einer punktförmigen LED-Lichtquelle 21, die auf einer entsprechenden Leiterplatte 22 angeordnet sind. Die LED-Leuchtmittel 21 bilden eine im Wesentlichen punktförmige einzelne Lichtquelle. Es handelt sich also entweder um eine einzelne Hochleistungs-LED oder um ein verhältnismäßig kompakt gestaltetes LED-Cluster bestehend aus mehreren LEDs. In beiden Fällen ist die LED-Lichtquelle 21 derart ausgestaltet, dass sie Weißlicht mit einer gewünschten Farbtemperatur abgibt.

Das optische System 30, welches das von den Leuchtmitteln 20 in einem verhältnismäßig breiten Winkelbereich abgebebene Licht beeinflusst, besteht aus zwei Komponenten, einerseits einem Kollimator 40 sowie andererseits einer - in Lichtabstrahlrichtung gesehen - dem Kollimator 40 nachfolgenden Abdeckscheibe 50. Diese ist im dargestellten Ausführungsbeispiel leicht gewölbt, insbesondere leicht konkav gewölbt ausgeführt, könnte allerdings ebenso plan oder auch anderweitig gestaltet sein. Sowohl Kollimator 40 als auch Abdeckscheibe 50 bestehen aus einem lichtdurchlässigen Material, insbesondere aus einem Kunststoffmaterial, welches über gute lichtbeeinflussende Eigenschaften verfügt und resistent gegenüber äußeren Einflüssen, insbesondere gegenüber Feuchtigkeit und dergleichen ist.

Erfindungsgemäß ist vorgesehen, dass der Kollimator 40, der durch ein einstückiges, im Wesentlichen plattenförmiges Bauteil gebildet ist, welches die bereits erwähnte Ebene E3 definiert, und in zwei Bereiche unterteilt ist. Ein erster, lichtbrechender Bereich 42 ist hierbei im geometrischen Zentrum des Kollimators 40 vorgesehen und weist auf der der LED-Lichtquelle 21 abgewandten Seite lichtbrechende Strukturen 43 auf. Die Aufgabe dieses zentralen Bereichs 42 besteht darin, das entsprechende Strahlenbündel in ein zentrales Lichtfeld umzuwandeln, welches dann über die Abdeckung 50 abgebeben wird.

Den zentralen Bereich 42 umrahmend ist ein äußerer Bereich 46 vorgesehen, in dem das Licht mittels Totalreflexion umgelenkt wird. Die entsprechenden Strukturen 48 befinden sich in diesem Fall auf der der LED-Lichtquelle 21 zugewandten Seite und erzeugen ein zweites, äußeres Lichtfeld, welches ebenfalls über die Abdeckung 50 abgegeben wird. Das letztendlich angestrebte, gleichmäßige Lichtfeld 200 wird dann durch eine Überlagerung des zentralen und des äußeren Lichtfelds erzielt, wobei diese Überlagerung durch eine nachfolgend näher beschriebene Aufweitungsstruktur, die sich auf der der LED-Lichtquelle 21 zugewandten Seite der Abdeckscheibe 50 befindet, erzielt wird. Dadurch, dass durch die Leuchtmittel 20 und die zugehörigen Komponenten 40 und 50 des optischen Systems 30 eine im Wesentlichen ausgedehnte gleichmäßig leuchtende Fläche als Lichtquelle realisiert wird, wird in vorteilhafter Weise der Effekt einer Defokussierung des Ziellichtfeldes beim Verlassen des optimalen Abbildungsabstandes erzielt. Mit anderen Worten, das optische System 30 ist zwar grundsätzlich derart ausgeführt, dass in einem vorgegebenen Abstand von bspw. 700mm eine exakte Überlagerung zwischen dem zentralen und dem äußeren Lichtfeld erzielt wird und dementsprechend das Ziellichtfeld besonders gleichmäßig und homogen ausgeleuchtet wird. Wird allerdings von diesem Idealabstand abgewiesen, so ist die sich hierbei ergebende Veränderung hinsichtlich der gleichmäßigen Ausleuchtung weniger stark ausgeprägt als bei den Leuchten im Stand der Technik. Im Wesentlichen kann in einem Bereich zwischen 500 und 800mm Entfernung nach wie vor eine optimale homogene Ausleuchtung des Lichtfeldes 200 erzielt werden.

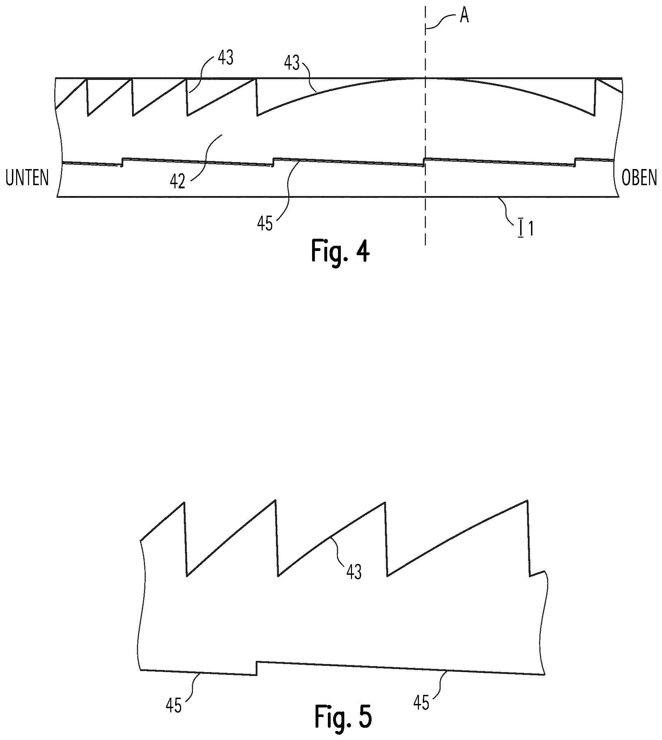

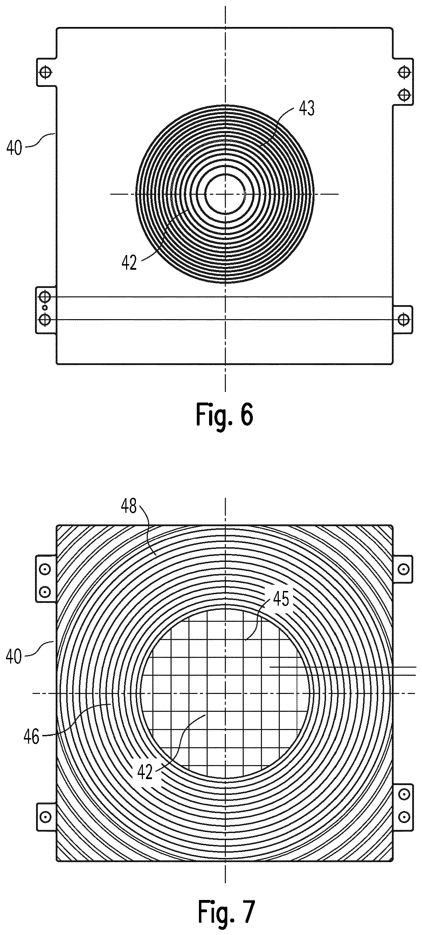

Die Ausgestaltung des Kollimators 40 kann den Figuren 4 bis 7 entnommen werden. Es handelt sich wie bereits erwähnt um ein im Wesentlichen plattenförmiges Kunststoffbauteil, welches - wie die Figuren 6 und 7 zeigen - eine im Wesentlichen quadratische Form aufweist und dazu dient, das über einen großen Winkelbereich abgegebene Strahlenbündel der LED-Lichtquelle 21 in ein im Wesentlichen paralleles Strahlenbündel umzusetzen. Hierzu weisen die Oberflächen des Kollimators 40 bestimmte lichtbeeinflussende Strukturen auf, die nachfolgend näher erläutert werden sollen.

So ist zunächst in einem zentralen Bereich 42 auf der der LED-Lichtquelle 21 abgewandten Seite des Kollimators 40 eine fresnelartige Struktur 43 vorgesehen, die mittels Lichtbrechung die den Kollimator 40 verlassenden Lichtstrahlen derart umlenken soll, dass diese im Wesentlichen parallel zur optischen Hauptachse A des Systems ausgerichtet werden. Derartige Fresnelstrukturen sind an sich bereits bekannt und tragen dazu bei, dass im Vergleich zu einer klassischen konvexen Linse die Dicke der entsprechenden optischen Komponente reduziert werden kann. Letztendlich kann mit Hilfe der insbesondere in den Figuren 4 und 5 erkennbaren sägezahnartigen Struktur, die - wie in Figur 6 erkennbar - eine Rotationsymmetrie um das Zentrum bzw. die Achse A aufweist, eine äußerst effiziente Bündelung des entsprechenden Lichts erzielt werden.

Den zentralen Bereich 42 ringartig umgebend, nunmehr allerdings auf der den Leuchtmitteln 20 zugewandten Seite, weist der Kollimator 40 ferner einen äußeren Bereich 46 auf, der wiederum mit fresnelartigen Strukturen 48 versehen ist. Auch diese sind entsprechend der Darstellung von Figur 7 bzgl. der optischen Hauptachse A rotationssymmetrisch ausgebildet und dienen dazu, die eher seitlich abgegebenen Lichtstrahlen derart zu beeinflussen, dass diese wiederum parallel zur optischen Achse A ausgerichtet werden. Während allerdings die Fresnelstrukturen 43 des zentralen Bereichs 42 die Lichtstrahlen mittels Brechung beeinflussen, erfolgt durch die Fresnelstrukturen 48 des äußeren Bereichs 46 eine Beeinflussung der Lichtstrahlen mittels Totalreflexion. D.h., diese wiederum sägezahnartigen Strukturen sind derart ausgeführt, dass Lichtstrahlen zunächst in die rippenartigen Vorsprünge eintreten können, allerdings aufgrund des Unterschieds der optischen Dichte zwischen Kollimator 40 und umgebender Luft derart totalreflektiert werden, dass sie den Kollimator 40 wiederum an der den Leuchtmitteln 20 abgewandten Seite verlassen. Durch die entsprechende Neigung der Flanken der totalreflektierenden Strukturen 48 ist wiederum gewährleistet, dass eine Ausrichtung des Lichts parallel zur optischen Achse A des Systems erfolgt.

Das auf diese Weise durch den Kollimator 40 beeinflusste Licht wird dann durch die Abdeckscheibe 50 auf das eigentliche Lichtfeld 200 projiziert, wobei diese hierzu eine nachfolgend noch näher beschriebene Linsenstruktur aufweist, welche letztendlich bewirkt, dass zentrales Lichtfeld und äußeres Lichtfeld überlagert werden, um eine homogene gleichmäßige Ausleuchtung zu erzielen.

Das Zusammenwirken dieser Komponenten bestehend aus der kompakt gestalteten LED-Lichtquelle 20, dem Kollimator 40 mit den lichtbrechenden und totalreflektierenden Strukturen und der Abdeckscheibe 50 führt zunächst dazu, dass das letztendlich erzielte Lichtfeld 200 im Randbereich einen großen Helligkeitsgradienten aufweist, also gegenüber der Umgebung stark abgegrenzt ist. Dies ist insbesondere an dessen Oberseite erwünscht, also in Richtung der Augen eines zu untersuchenden Patienten, um hier Blendungen zu vermeiden. An der gegenüberliegenden Seite hingegen sollte wie bereits erwähnt eine deutlich unschärfere Abgrenzung des Lichtfelds 200 vorliegen, um eine Reduzierung von Ermüdungserscheinungen des Behandlers zu erzielen. D.h., das Lichtfeld 200 sollte idealerweise in einer Richtung eine Asymmetrie mit einem weichen Auslauf zur Unterseite hin aufweisen.

Um diesen Effekt zu erzielen, ist an der den lichtbrechenden Strukturen 43 des zentralen Bereichs 42 gegenüberliegenden Rückseite, also an der den Leuchtmitteln 20 zugewandten Seite des Kollimators 40 eine zusätzliche Strukturierung vorgesehen. Diese besteht bei dem in den Figuren 3 bis 7 dargestellten ersten Ausführungsbeispiel aus segmentartigen einzelnen Kacheln 45, welche - wie in Figur 7 erkennbar - den gesamten zentralen Bereich 42 bis zur äußeren Struktur 46 hin matrixartig ausfüllen. Diese facettenartigen Kacheln 45 weisen nunmehr eine leichte Neigung bzw. Kippung auf, um die oben erwähnte einseitige Aufweitung des Lichtfelds erzielen zu können. Insbesondere sind hierbei die Kacheln 45 um eine horizontale Achse (beziehungsweise allgemein um eine Achse, welche in der Ebene des Kollimators 40 liegt und im Wesentlichen senkrecht zur Richtung der asymmetrischen Aufweitung steht) gekippt, d.h., sie schließen im dargestellten Fall mit der vertikalen Achse I1 oder O1 einen kleinen Winkel ein (siehe Figur 4), sodass in den Kollimator 40 eintretende Lichtstrahlenbündel leicht zur Unterseite hin aufgeweitet werden. Selbst eine geringe Neigung der Kacheln 45, wie sie in den Figuren 4 und 5 erkennbar ist, führt hier bereits dazu, dass der untere Randbereich des Lichtfelds 200 einen etwas reduzierten Helligkeitsgradienten aufweist.

Alternativ oder ergänzend zu der soeben beschriebenen Kippung der Kacheln 45 um eine senkrecht zur Richtung der asymmetrischen Aufweitung stehende Achse wäre es auch denkbar, in entsprechender Weise die Linsenstruktur auf der Abdeckscheibe 50 zu kippen um den angestrebten vorteilhaften Effekt der asymmetrischen Lichtfeldverteilung zu erzeugen. Dies wird zu einem späteren Zeitpunkt noch näher erläutert.

Darüber hinausgehend können allerdings die Kacheln 45 auch noch in der vertikalen Achse I1 bzw. O1 (beziehungsweise allgemein um eine Achse, welche parallel zur Richtung der asymmetrischen Aufweitung des Lichtfelds verläuft) gekippt sein, wobei sie dann vorzugsweise bzgl. der Ebene E1, welche senkrecht zur Ebene E3 des Kollimators 40 steht und durch eine parallel zur Richtung der asymmetrischen Aufweitung verlaufende Achse I1 aufgespannt wird, symmetrisch angeordnet sind. Hierdurch wird die horizontale Ausdehnung des zentralen Lichtfelds 200 beeinflusst, was letztendlich zusätzlich zur homogenen Ausleuchtung des Lichtfelds 200 beiträgt.

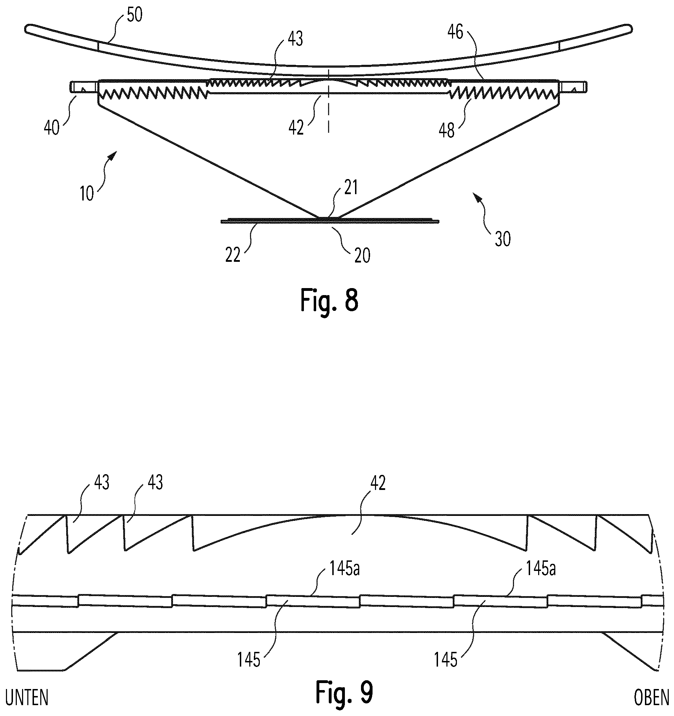

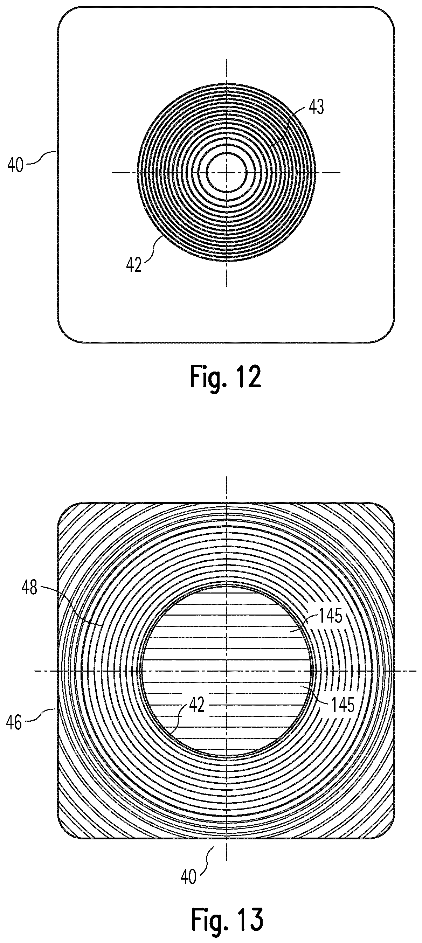

Diese weitere Kippung der Kacheln 45 um eine vertikale Achse (bzw. um eine parallel zur Richtung der asymmetrischen Aufweitung verlaufenden Achse) und die symmetrische Ausgestaltung hinsichtlich der vertikalen Ebene E1 führt insgesamt gesehen zu einer etwa konkav-artigen Ausgestaltung der Oberfläche der den Leuchtmitteln 20 zugewandten Rückseite des zentralen Bereichs 42 des Kollimators 40. Der hieraus resultierende Effekt der nochmals etwas homogeneren Ausleuchtung des Lichtfelds 200 kann nunmehr allerdings auch dadurch erreicht werden, dass die auf gleicher Höhe liegenden einzelnen Kacheln zu einer größeren Fläche vereint werden, die dann ebenfalls eine entsprechende Krümmung bzw. Wölbung aufweist. Ein entsprechendes Ausführungsbeispiel hierzu ist in den Figuren 8 bis 13 dargestellt und soll nachfolgend erläutert werden, wobei vergleichbare Elemente mit gleichen Bezugszeichen versehen wurden.

Auch bei diesem zweiten Ausführungsbeispiel besteht somit das optische System der erfindungsgemäßen Leuchte 100 aus dem plattenförmigen Kollimator 40 und der dem Kollimator 40 nachfolgenden Abdeckscheibe 50 mit der Linsenstruktur. Wiederum weist der Kollimator 40 einen zentralen Bereich 42 auf, der an seiner der LED-Lichtquelle 21 abgewandten Seite mit lichtbrechenden Strukturen 43 versehen ist, wobei ferner ein den zentralen Bereich 42 umgebender äußerer Bereich 46 vorgesehen ist, der auf einer der LED-Lichtquelle 21 zugewandten Seite mit zur Totalreflexion ausgebildeten Strukturen 48 versehen ist. Sowohl die Strukturen 43 des zentralen Bereichs 42 als auch die Strukturen 48 des ringartigen äußeren Bereichs 46 entsprechen hierbei hinsichtlich ihrer Ausgestaltung und ihrer Funktion den Strukturen des Ausführungsbeispiels der Figuren 3 und 7. Somit ergeben sich hinsichtlich dieser Merkmale keine Unterschiede zum ersten Ausführungsbeispiel.

Der entscheidende Unterschied zwischen dem ersten Ausführungsbeispiel der Figuren 3 bis 7 und dem zweiten Ausführungsbeispiel der Figuren 8 bis 13 liegt in der Ausgestaltung der den lichtbrechenden Strukturen 43 des zentralen Bereichs 42 gegenüberliegenden Rückseite des Kollimators 40, die bei dem ersten Ausführungsbeispiel matrixartig mit den bereits erwähnten Kacheln 45 bedeckt ist.

Bei dem zweiten Ausführungsbeispiel sind wiederum Teilflächen 145 vorgesehen, die nunmehr allerdings in Form von streifenförmigen Flächenbereichen 145 vorliegen, die sich bei einer Ausrichtung der Leuchte entsprechend Figur 1 jeweils horizontal (oder allgemein senkrecht zur Richtung der asymmetrischen Aufweitung) vom linken Ende des zentralen Bereichs 42 bis zum rechten Ende erstrecken. Wiederum sind diese streifenförmigen Flächenbereichen 145 derart angeordnet, dass sie die Rückseite des zentralen Bereichs 42 vorzugsweise vollständig abdecken.

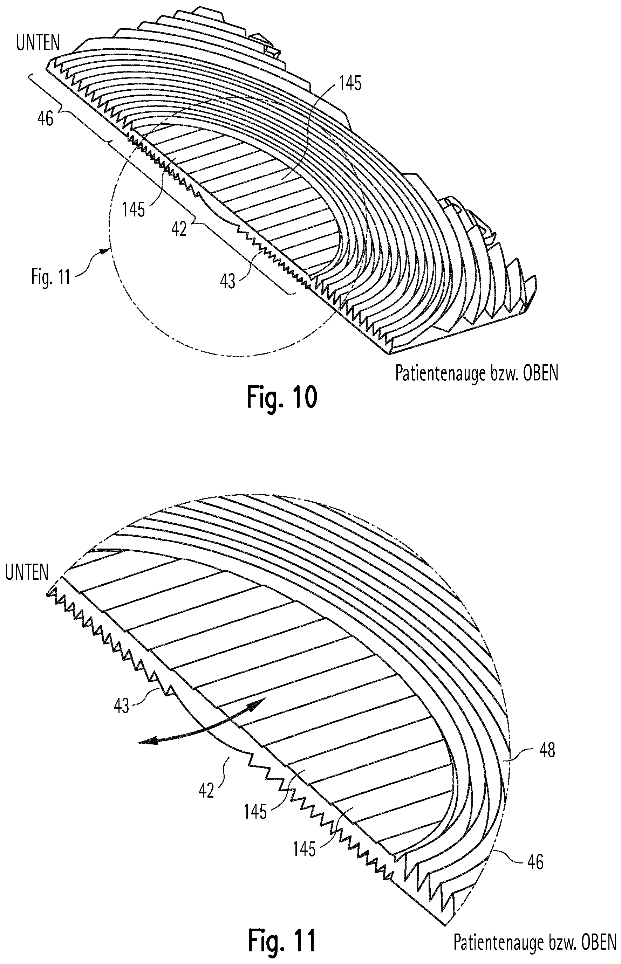

Analog zu den Kacheln 45 besteht dabei die wesentliche Funktion der streifenförmigen Teilflächen 145 zunächst darin, die erfindungsgemäße asymmetrische Aufweitung des Lichtfelds 200 zu erzielen, derart, dass an der Unterseite bzw. der dem Patientenauge gegenüberliegenden Seite des Lichtfelds 200 ein geringerer Helligkeitskontrast auftritt als am gegenüberliegenden Randbereich. Auch in diesem Fall sind hierzu die streifenförmigen Teilflächen 145 jeweils um eine Achse gekippt, welche in der Ebene E3 des Kollimators 40 liegt und im Wesentlichen senkrecht zu der Richtung asymmetrischen der Aufweitung des Lichtfelds 200 steht. Die entsprechende Schnittdarstellung der Figur 9, welche der Darstellung von Figur 4 des ersten Ausführungsbeispiels entspricht, zeigt also eine vergleichbare Neigung der Teilflächen 145, durch welche in analoger Weise die Lichtstrahlen beeinflusst, wie dies oben im Zusammenhang mit den Figuren 3 bis 7 erläutert wurde. Die hieraus insgesamt resultierende sägezahnartige Struktur des entsprechenden Oberflächenbereichs des Kollimators 40 kann auch den beiden perspektivischen Teilschnitt-Ansichten der Figuren 10 und 11 entnommen werden.

Zusätzlich ist vorgesehen, dass die streifenförmigen Flächenbereiche 145 bezüglich der Richtung der asymmetrischen Aufweitung des Lichtfelds 200 konkav gewölbt sind, wobei die Richtung der Wölbung stark überhöht in Figur 11 schematisch durch den Doppelpfeil dargestellt ist. Die konkave Ausgestaltung der streifenförmigen Flächenbereiche 145 ist dabei wiederum vorzugsweise derart, dass sich bezüglich der Ebene E1, welche senkrecht zur Ebene E3 des Kollimators 40 steht und durch eine parallel zur Richtung der asymmetrischen Aufweitung verlaufende Achse I1 aufgespannt wird, eine symmetrische Konfiguration ergibt. In der Schnittdarstellung der Figur 9 sind aufgrund dieser konkaven Krümmung die hinteren Endbereiche der streifenförmigen Flächenbereiche 145 jeweils sichtbar.

Die sich hierbei ergebene Oberflächengestaltung der Rückseite des zentralen Bereichs 42 des Kollimators 40 entspricht insgesamt derjenigen des Ausführungsbeispiels der Figuren 3 bis 7, wobei nunmehr allerdings die auf gleicher Höhe liegenden einzelnen Kacheln 45 durch sich kontinuierlich und stetig erstreckende Oberflächenbereiche 145 ersetzt wurden.

Im Vergleich zum ersten Ausführungsbeispiel der Figuren 3 bis 7 stellt dabei das zweite Ausführungsbeispiel der Figuren 8 bis 13 die bevorzugte Ausführungsform dar, da nunmehr die Kanten an den Übergängen zweier benachbarter Kacheln 45 eliminiert werden. Derartige Kanten bringen grundsätzlich die Gefahr einer ungewünschten, unkontrollierbaren Lichtstreuung mit sich, sodass also durch die Gestaltung der Oberfläche entsprechend dem zweiten Ausführungsbeispiel nochmals eine etwas bessere Kontrolle des Lichts durch den Kollimator 40 erzielt werden kann.

Die oben beschriebenen Maßnahmen tragen dem Umstand Rechnung, dass das Spektrum des von der LED-Lichtquelle 21 abgegebenen Lichts vom Abstrahlwinkel abhängig ist. Insbesondere ist das im Zentrum bzw. zentral abgegebene Licht kälter und wird mit steigendem Abstrahlwinkel radial nach außen wärmer, was auf die zunehmende Weglänge des von dem LED-Chip abgegebenen blauen Licht durch das entsprechende Farbumwandlungsmaterial, bspw. durch den Phosphor, zurückzuführen ist. Das Licht des zentralen Lichtfelds und das des äußeren Lichtfelds wird also zunächst eine unterschiedliche Farbe bzw. Farbtemperatur aufweisen. Dadurch allerdings, dass mit Hilfe der Abdeckung 50 letztendlich eine Überlagerung beider Lichtfelder erzielt wird, wird insgesamt eine homogene Ausleuchtung erzielt. Zur gezielten Durchmischung des Lichtfeldes bzw. zur Erlangung eines farbhomogenen Lichtfelds trägt auch bei, dass die lichtbrechenden Strukturen 43 der zentralen Kollimationsstruktur und die Flächen 48 der äußeren Kollimationsstruktur 46 als asphärische Flächen ausgeführt sind. Ihre Form ist dabei abhängig von dem Abstand gegenüber dem Zentrum der optischen Achse A des Kollimators 40, insgesamt weisen jedoch beide Strukturen eine Rotationssymmetrie auf, wie in den Figuren erkennbar ist.

Die auf diese Weise durch den Kollimator 40 beeinflussten Lichtstrahlen werden dann abschließend durch die Abdeckscheibe 50 beeinflusst, wobei diese für beide Ausführungsbeispiele des Kollimators 40 in gleicher Weise ausgeführt ist. Die Abdeckscheibe 50 kann wie bereits erwähnt leicht konkav oder auch eben ausgeführt sein und besitzt auf ihrer der LED-Lichtquelle 21 zugewandten Seite eine Linsenstruktur. Die den Leuchtmitteln abgewandte Seite hingegen ist vorzugsweise unstrukturiert, also glatt ausgebildet und ermöglicht dementsprechend eine einfache Reinigung, was insbesondere dann von Vorteil ist, wenn die Abdeckung 50 gleichzeitig die Außenseite der Leuchte 100 bildet.

Ebenso wie der Kollimator 40 ist auch die Linsenstruktur der Abdeckscheibe 50 zweiteilig ausgestaltet. Wie in Figur 8 angedeutet ist hierbei wiederum ein erster zentraler Bereich 52 mit zugehörigen ersten Linsen 53 sowie ein äußerer Bereich 56 mit zugehörigen zweiten Linsen 58 vorgesehen. Beide Bereiche der Linsenstruktur entsprechen hierbei den beiden Bereichen des Kollimators 40. Mit anderen Worten, durch den zentralen Bereich 42 des Kollimators 40 beeinflusste Lichtstrahlen sollen durch den zentralen Linsenbereich 52 der Abdeckung beeinflusst werden, während hingegen das über den äußeren Bereich 46 des Kollimators 40 abgegebene Licht durch die äußere Linsenstruktur beeinflusst wird.

Beide Linsenstrukturen 52 und 56 sind allerdings jeweils als Mikrolinsenarray ausgeführt und dienen dazu, als Aufweitungsstruktur die entsprechenden Lichtteilstrahlenbündel auf den zu beleuchtenden Bereich zu projizieren. Das Verhältnis von Höhe zu Breite der Einzellinsen definiert hierbei den Wert der horizontalen und vertikalen Aufweitung des Lichtfelds 200, wobei diese Werte für die zentralen Linsen 43 und die äußeren Linsen 58 leicht unterschiedlich sind, also beide Lichtfelder leicht unterschiedlich aufgeweitet werden. Letztendlich führen diese Maßnahmen dann dazu, dass zentrales Lichtfeld und äußeres Lichtfeld innerhalb des für eine Beleuchtung vorgesehenen Abstands von etwa 500 bis 800mm im Wesentlichen vollständig überlagert werden und somit ein insgesamt homogen ausgeleuchtetes Lichtfeld 200 erhalten wird.

Jede einzelne Linse der Abdeckscheibe 50 projiziert hierbei das komplette zentrale bzw. äußere Lichtfeld, sodass die Abschattung einzelner Linsen oder Teile der Abdeckscheibe 50 nicht zu Schatten in dem Lichtfeld 200 führt. Auch dies trägt zu einer optimierten Beleuchtung bei. Im dargestellten Ausführungsbeispiel weisen die Linsen des äußeren Bereichs eine verschiedene Größe und Form im Vergleich zu den Linsen des zentralen Bereichs auf. Insbesondere sind die Linsen 53 des zentralen Bereichs 52 etwa quadratisch ausgeführt, während hingegen die Linsen 58 des äußeren Bereichs eine eher rechteckige Form besitzen. Dies muss allerdings nicht zwingend der Fall sein. Entscheidend ist lediglich, dass die Aufweitung der einzelnen Strahlenbündel durch die Linsen derart erfolgt, dass insgesamt eine vollständige Überlagerung stattfindet, die weitestgehend unabhängig vom Abstand zur Leuchte zu einer gleichmäßigen Ausleuchtung führt. Im Ergebnis ergibt sich ein homogenes Ziellichtfeld, welches die gewünschten Eigenschaften aufweist.

Um die oben erläuterte asymmetrische Lichtfeldverteilung zu erreichen, ist es denkbar, dass alternativ oder ergänzend zur Neigung der Kacheln 45 oder der streifenförmigen Teilflächen 145 ein Teil der Linsenstrukturen 52 und / oder der Linsenstrukturen 56 oder alle Linsen 53, 58 bezüglich der Ebene E3 des Kollimators um eine Achse gekippt sind, welche im Wesentlichen senkrecht zur Richtung der asymmetrischen Aufweitung ausgerichtet ist . Auch diese Maßnahme führt zu der vorteilhaften asymmetrischen Aufweitung des Lichtfelds 200 an dessen Unterseite 202, so dass ggf. auf die entsprechende geneigte Ausrichtung der Kacheln 45 bzw. streifenförmigen Teilflächen 145 auch verzichtet werden könnte.

Insgesamt kann also mit Hilfe der erfindungsgemäßen Leuchte eine qualitativ hochwertige Ausleuchtung eines zu untersuchenden oder zu behandelnden Bereichs erzielt werden. Die Leuchte zeichnet sich dabei auch durch ihren verhältnismäßig einfachen Aufbau aus, der nur wenige Einzelkomponenten beinhaltet und im Vergleich zu bekannten Lösungen deutlich weniger kritisch hinsichtlich einer exakten Ausrichtung und Positionierung der einzelnen Komponenten zueinander ist.

## Patentansprüche

1. Medizinische Leuchte (100), insbesondere zahnärztliche Behandlungsleuchte für das intraorale Ausleuchten eines Operationsfelds, aufweisend eine Beleuchtungseinheit (10) mit Leuchtmitteln (20) und optischen Mitteln (30) zur Erzeugung eines Lichtfelds (200) in einer Objektebene (O),
wobei die Leuchtmittel (20) durch eine im Wesentlichen punktförmige LED-Lichtquelle (21) gebildet sind und die optischen Mittel (30) einen plattenartigen Kollimator (40) sowie eine Abdeckscheibe (50) aufweisen,
wobei der Kollimator (40) einen zentralen Bereich (42), der auf einer der LED-Lichtquelle (21) abgewandten Seite mit lichtbrechenden Strukturen (43) versehen ist, sowie einen den zentralen Bereich (42) umgebenden äußeren Bereich (46) aufweist, der auf einer der LED-Lichtquelle (21) zugwandten Seite mit zur Totalreflexion ausgebildeten Strukturen (48) versehen ist,
wobei die Abdeckscheibe (50) mit einer Linsenstruktur versehen ist, welche eine Vielzahl von Einzellinsen aufweist, die dazu ausgebildet sind, das von dem Kollimator (40) abgegebene und in die Linsen eintretende Licht jeweils auf die Objektebene zu projizieren,
und wobei die der LED-Lichtquelle (21) zugewandte Rückseite des zentralen Bereichs (42) des Kollimators (40) mit Teilflächen (45, 145) versehen ist, welche in Bezug zu einer Ebene (E3) des Kollimators (40) und damit zur Objektebene (O) eine Neigung aufweisen,
**dadurch gekennzeichnet,**
**dass** die Teilflächen (45, 145) dazu ausgebildet sind, das Lichtfeld (200) in einer Richtung asymmetrisch aufzuweiten.

2. Medizinische Leuchte nach Anspruch 1,
**dadurch gekennzeichnet,**
**dass** zumindest einige der Teilflächen (45, 145), vorzugsweise alle, jeweils um eine Achse gekippt sind, welche in der Ebene (E3) des Kollimators (40) liegt und im Wesentlichen senkrecht zur Richtung der asymmetrischen Aufweitung steht.

3. Medizinische Leuchte nach Anspruch 2,
**dadurch gekennzeichnet,**
**dass** die Teilflächen (145) streifenförmig ausgebildet sind und sich jeweils im Wesentlichen senkrecht zur Richtung der asymmetrischen Aufweitung entlang ihrer jeweiligen Kippachse erstrecken.

4. Medizinische Leuchte nach Anspruch 3,
**dadurch gekennzeichnet,**
**dass** die streifenförmigen Flächenbereiche (145) bezüglich der Richtung der asymmetrischen Aufweitung konkav gewölbt sind,
wobei die streifenförmigen Flächenbereiche (145) vorzugsweise jeweils bezüglich einer Ebene (E1), welche senkrecht zur Ebene (E3) des Kollimators (40) steht und durch eine parallel zur Richtung der asymmetrischen Aufweitung verlaufende Achse (I1) aufgespannt wird, symmetrisch ausgebildet sind.

5. Medizinische Leuchte nach Anspruch 2,
**dadurch gekennzeichnet,**
**dass** die Teilflächen (45) kachelförmig sind und die der LED-Lichtquelle (21) zugewandte Rückseite des zentralen Bereichs (42) des Kollimators (40) matrixartig bedecken.

6. Medizinische Leuchte nach Anspruch 5,
**dadurch gekennzeichnet,**
**dass** zumindest einige der kachelförmigen Teilflächen (45) bezüglich der Ebene (E3) des Kollimators (40) um eine Achse, welche parallel zur Richtung der asymmetrischen Aufweitung verläuft, gekippt sind.

7. Medizinische Leuchte nach Anspruch 6,
**dadurch gekennzeichnet,**
**dass** die Mehrzahl der kachelförmigen Teilflächen (45) bezüglich einer Ebene (E1), welche senkrecht zur Ebene (E3) des Kollimators (40) steht und durch eine parallel zur Richtung der asymmetrischen Aufweitung verlaufende Achse (I1) aufgespannt wird, symmetrisch angeordnet sind.

8. Medizinische Leuchte nach einem der vorherigen Ansprüche,
**dadurch gekennzeichnet,**
**dass** die lichtbrechenden Strukturen (43) des zentralen Bereichs (42) des Kollimators (40) eine Fresnel-Struktur bilden.

9. Medizinische Leuchte nach Anspruch 8,
**dadurch gekennzeichnet,**
**dass** die zur Totalreflexion ausgebildeten Strukturen (48) des Kollimators (40) eine der LED-Lichtquelle (21) zugewandte weitere Fresnel-Struktur bilden, welche vorzugsweise in einer Projektion senkrecht zur Ebene (E3) des Kollimators (40) den zentralen Bereich (42) ringartig umgibt.

10. Medizinische Leuchte nach Anspruch 8 und Anspruch 9,
**dadurch gekennzeichnet,**
**dass** die lichtbrechenden Strukturen (43) und die zur Totalreflexion ausgebildeten Strukturen (48) des Kollimators (40) eine gemeinsame Rotationssymmetrie aufweisen.

11. Medizinische Leuchte nach einem der Ansprüche 8 bis 10,
**dadurch gekennzeichnet,**
**dass** die lichtbrechenden Strukturen (43) und die zur Totalreflexion ausgebildeten Strukturen (48) des Kollimators (40) asphärische Flächenbereiche aufweisen.

12. Medizinische Leuchte nach einem der vorherigen Ansprüche,
**dadurch gekennzeichnet,**
**dass** die optischen Mittel (30) derart ausgeführt sind, dass das Lichtfeld (200), welches senkrecht zur optischen Achse (A) der Leuchte (100) auf die Objektebene (O) projiziert ist, eine größere Ausweitung entlang einer senkrecht zur Richtung der asymmetrischen Aufweitung verlaufenden Achse (O2) aufweist als entlang einer parallel zur Richtung der asymmetrischen Aufweitung verlaufenden Achse (O1).

13. Medizinische Leuchte nach einem der vorherigen Ansprüche,
**dadurch gekennzeichnet,**
**dass** zumindest einige der die Linsenstruktur bildenden Linsen (53, 58) bezüglich der Ebene (E3) des Kollimators um eine Achse gekippt sind, welche im Wesentlichen senkrecht zur Richtung der asymmetrischen Aufweitung ausgerichtet ist.

14. Medizinische Leuchte nach einem der vorherigen Ansprüche,
**dadurch gekennzeichnet,**
**dass** die Linsen (53, 58) auf einer der LED-Lichtquelle (21) zugewandten Seite der Abdeckscheibe (50) angeordnet sind,
wobei vorzugsweise die der LED-Lichtquelle (21) abgewandte Seite der Abdeckscheibe (50) glatt ausgebildet ist, insbesondere eine glatte Außenfläche der Leuchte (100) bildet.

15. Medizinische Leuchte nach einem der vorherigen Ansprüche,
**dadurch gekennzeichnet,**
**dass** die Linsenstruktur der Abdeckscheibe (50) einen inneren Bereich (52) sowie einen äußeren Bereich (56) aufweist, wobei
• Linsen (53) des inneren Bereichs (52) dazu ausgebildet sind, das von dem zentralen Bereich (42) des Kollimators (40) abgegebene Licht in Form eines zentralen Lichtfelds auf die Objektebene (O) zu projizieren und
• Linsen (58) des äußeren Bereichs (56) dazu ausgebildet sind, das von dem äußeren Bereich (46) des Kollimators (40) abgegebene Licht in Form eines äußeren Lichtfelds auf die Objektebene (O) zu projizieren,
und wobei sich zentrales Lichtfeld und äußeres Lichtfeld im Wesentlichen vollständig überlagern,
wobei vorzugsweise jede Einzellinse (53, 58) des inneren oder äußeren Bereichs (52, 56) jeweils vollständig das entsprechende zentrale bzw. äußere Lichtfeld projiziert.

16. Medizinische Leuchte nach Anspruch 15,
**dadurch gekennzeichnet,**
**dass** die Linsen (53) des inneren Bereichs (52) im Wesentlichen quadratisch sind und die Linsen (58) des äußeren Bereichs (56) in Richtung einer Achse (I2) des Kollimators (40), welche senkrecht zur Richtung der asymmetrischen Aufweitung verläuft, eine größere Erstreckung aufweisen als in einer parallel zur Richtung der asymmetrischen Aufweitung verlaufenden Achse (I1) des Kollimators (40).

## Claims

1. Medical light (100), in particular dental treatment light for the intraoral illumination of an operation field, having an illumination unit (10) having lighting means (20) and optical means (30) for generating a light field (200) in an object plane (O),
wherein the lighting means (20) are formed by an essentially punctiform LED light source (21) and the optical means (30) have a plate-shaped collimator (40) and a cover pane (50),
wherein the collimator (40) has a central area (42), which is provided with light-refracting structures (43) on a side facing away from the LED light source (21), and an outer area (46), which surrounds the central area (42) and which is provided with structures (48) designed for total reflection on a side facing toward the LED light source (21),
wherein the cover pane (50) is provided with a lens structure, which has a plurality of individual lenses each designed to project the light emitted by the collimator (40) and entering the lenses onto the object plane,
and wherein the rear side of the central area (42) of the collimator (40) facing toward the LED light source (21) is provided with partial surfaces (45, 145), which have an inclination in relation to a plane (E3) of the collimator (40) and thus in relation to the object plane (O),
**characterized in that**
the partial surfaces (45, 145) are designed to asymmetrically expand the light field (200) in one direction.

2. Medical light according to Claim 1,
**characterized in that**
at least some of the partial surfaces (45, 145), preferably all of them, are each tilted around an axis which lies in the plane (E3) of the collimator (40) and is essentially perpendicular to the direction of the asymmetrical expansion.

3. Medical light according to Claim 2,
**characterized in that**
the partial surfaces (145) are formed strip-shaped and each extend essentially perpendicular to the direction of the asymmetrical expansion along their respective tilt axis.

4. Medical light according to Claim 3,
**characterized in that**
the strip-shaped surface areas (145) are concavely curved with respect to the direction of the asymmetrical expansion,
wherein the strip-shaped surface areas (145) are preferably each formed symmetrically with respect to a plane (E1), which is perpendicular to the plane (E3) of the collimator (40) and is spanned by an axis (I1) extending parallel to the direction of the asymmetrical expansion.

5. Medical light according to Claim 2,
**characterized in that**
the partial surfaces (45) are tile-shaped and cover the rear side of the central area (42) of the collimator (40) facing toward the LED light source (21) like a matrix.

6. Medical light according to Claim 5,
**characterized in that**
at least some of the tile-shaped partial surfaces (45) are tilted with respect to the plane (E3) of the collimator (40) around an axis which extends parallel to the direction of the asymmetrical expansion.

7. Medical light according to Claim 6,
**characterized in that**
the majority of the tile-shaped partial surfaces (45) are arranged symmetrically with respect to a plane (E1), which is perpendicular to the plane (E3) of the collimator (40) and is spanned by an axis (I1) extending parallel to the direction of the asymmetrical expansion.

8. Medical light according to any one of the preceding claims,
**characterized in that**
the light-refracting structures (43) of the central area (42) of the collimator (40) form a Fresnel structure.

9. Medical light according to Claim 8,
**characterized in that**
the structures (48) of the collimator (40) designed for total reflection form a further Fresnel structure facing toward the LED light source (21), which preferably encloses the central area (42) like a ring in a projection perpendicular to the plane (E3) of the collimator (40).

10. Medical light according to Claim 8 and Claim 9,
**characterized in that**
the light-refracting structures (43) and the structures (48) of the collimator (40) designed for total reflection have a common rotational symmetry.

11. Medical light according to any one of Claims 8 to 10,
**characterized in that**
the light-refracting structures (43) and the structures (48) of the collimator (40) designed for total reflection have aspheric surface areas.

12. Medical light according to any one of the preceding claims,
**characterized in that**
the optical means (30) are constructed such that the light field (200), which is projected perpendicular to the optical axis (A) of the light (100) on the object plane (O), has a greater expansion along an axis (O2) extending perpendicular to the direction of the asymmetrical expansion than along an axis (O1) extending parallel to the direction of the asymmetrical expansion.

13. Medical light according to any one of the preceding claims,
**characterized in that**
at least some of the lenses (53, 58) forming the lens structure are tilted with respect to the plane (E3) of the collimator around an axis which is aligned essentially perpendicular to the direction of the asymmetrical expansion.

14. Medical light according to any one of the preceding claims,
**characterized in that**
the lenses (53, 58) are arranged on a side of the cover pane (50) facing toward the LED light source (21),
wherein preferably the side of the cover pane (50) facing away from the LED light source (21) is formed smooth, in particular forms a smooth outer surface of the light (100).

15. Medical light according to any one of the preceding claims,
**characterized in that**
the lens structure of the cover pane (50) has an inner area (52) and an outer area (56), wherein
• lenses (53) of the inner area (52) are designed to project the light emitted by the central area (42) of the collimator (40) in the form of a central light field on the object plane (O) and
• lenses (58) of the outer area (56) are designed to project the light emitted by the outer area (46) of the collimator (40) in the form of an outer light field on the object plane (O),
and wherein central light field and outer light field are essentially completely superimposed,
wherein preferably each individual lens (53, 58) of the inner or outer area (52, 56) completely projects the corresponding central or outer light field, respectively.

16. Medical light according to Claim 15,
**characterized in that**
the lenses (53) of the inner area (52) are essentially square and the lenses (58) of the outer area (56) have a greater extension in the direction of an axis (I2) of the collimator (40), which extends perpendicular to the direction of the asymmetrical expansion, than in an axis (I1) of the collimator (40) extending parallel to the direction of the asymmetrical expansion.

## Revendications

1. Lampe médicale (100), en particulier lampe de traitement dentaire pour l'éclairage intra-buccal d'un champ opératoire, comprenant une unité d'éclairage (10) équipée de moyens d'éclairage (20) et de moyens optiques (30) pour générer un champ lumineux (200) dans un plan objet (O),
les moyens d'éclairage (20) étant formés par une source de lumière à DEL (21) sensiblement ponctuelle et les moyens optiques (30) comprenant un collimateur en forme de plaque (40) ainsi qu'une vitre de protection (50),
le collimateur (40) présentant une zone centrale (42) qui est pourvue, sur un côté opposé à la source de lumière à DEL (21), de structures (43) réfractant la lumière, ainsi qu'une zone extérieure (46) entourant la zone centrale (42), qui est pourvue, sur un côté tourné vers la source de lumière à DEL (21), de structures (48) conçues pour la réflexion totale,
la plaque de recouvrement (50) étant pourvue d'une structure de lentilles qui comprend une pluralité de lentilles individuelles conçues pour projeter la lumière émise par le collimateur (40) et entrant dans les lentilles respectivement sur le plan objet,
et la face arrière de la zone centrale (42) du collimateur (40) tournée vers la source de lumière à DEL (21) étant pourvue de surfaces partielles (45, 145) qui présentent une inclinaison par rapport à un plan (E3) du collimateur (40) et donc par rapport au plan objet (O),
**caractérisée**
**en ce que** les surfaces partielles (45, 145) sont conçues pour élargir le champ lumineux (200) de manière asymétrique dans une direction.

2. Lampe médicale selon la revendication 1,
**caractérisée**
**en ce que** certaines des surfaces partielles (45, 145), de préférence toutes, sont inclinées chacune autour d'un axe qui se trouve dans le plan (E3) du collimateur (40) et qui est sensiblement perpendiculaire à la direction de l'élargissement asymétrique.

3. Lampe médicale selon la revendication 2,
**caractérisée**
**en ce que** les surfaces partielles (145) sont réalisées en forme de bandes et s'étendent chacune essentiellement perpendiculairement à la direction de l'élargissement asymétrique le long de leur axe d'inclinaison respectif.

4. Lampe médicale selon la revendication 3,
**caractérisée**
**en ce que** les zones de surface (145) en forme de bandes sont bombées de manière concave par rapport à la direction de l'élargissement asymétrique, les zones de surface (145) en forme de bandes étant de préférence symétriques par rapport à un plan (E1) qui est perpendiculaire au plan (E3) du collimateur (40) et qui est défini par un axe (I1) s'étendant parallèlement à la direction de l'élargissement asymétrique.

5. Lampe médicale selon la revendication 2,
**caractérisée**
**en ce que** les surfaces partielles (45) sont en forme de carreaux et recouvrent de manière matricielle la face arrière de la zone centrale (42) du collimateur (40) tournée vers la source de lumière à DEL (21).

6. Lampe médicale selon la revendication 5,
**caractérisée**
**en ce que** certaines des surfaces partielles en forme de carreaux (45) sont inclinées par rapport au plan (E3) du collimateur (40) autour d'un axe parallèle à la direction de l'élargissement asymétrique.

7. Lampe médicale selon la revendication 6,
**caractérisée**
**en ce que** la plupart des surfaces partielles en forme de carreaux (45) sont agencées symétriquement par rapport à un plan (E1) qui est perpendiculaire au plan (E3) du collimateur (40) et qui est défini par un axe (I1) parallèle à la direction de l'élargissement asymétrique.

8. Lampe médicale selon l'une des revendications précédentes,
**caractérisée**
**en ce que** les structures réfractant la lumière (43) de la zone centrale (42) du collimateur (40) forment une structure de Fresnel.

9. Lampe médicale selon la revendication 8,
**caractérisée**
**en ce que** les structures (48) du collimateur (40) conçues pour la réflexion totale forment une autre structure de Fresnel tournée vers la source de lumière à DEL (21), qui entoure de préférence la zone centrale (42) en forme d'anneau selon une projection perpendiculaire au plan (E3) du collimateur (40).

10. Lampe médicale selon la revendication 8 et la revendication 9,
**caractérisée**
**en ce que** les structures (43) réfractant la lumière et les structures (48) conçues pour la réflexion totale du collimateur (40) présentent une symétrie de rotation commune.

11. Lampe médicale selon l'une des revendications 8 à 10,
**caractérisée**
**en ce que** les structures (43) réfractant la lumière et les structures (48) conçues pour la réflexion totale du collimateur (40) présentent des zones de surface asphériques.

12. Lampe médicale selon l'une des revendications précédentes,
**caractérisée**
**en ce que** les moyens optiques (30) sont conçus de telle sorte que le champ lumineux (200), qui est projeté perpendiculairement à l'axe optique (A) de la lampe (100) sur le plan objet (O), présente une plus grande extension le long d'un axe (O2) perpendiculaire à la direction de l'élargissement asymétrique que le long d'un axe (O1) parallèle à la direction de l'élargissement asymétrique.

13. Lampe médicale selon l'une des revendications précédentes,
**caractérisée**
**en ce que** au moins certaines des lentilles (53, 58) formant la structure de lentilles sont inclinées par rapport au plan (E3) du collimateur autour d'un axe qui est orienté sensiblement perpendiculairement à la direction de l'élargissement asymétrique.

14. Lampe médicale selon l'une des revendications précédentes,
**caractérisée**
**en ce que** les lentilles (53, 58) sont agencées sur un côté de la vitre de protection (50) tourné vers la source de lumière à DEL (21),
le côté de la vitre de protection (50) opposé à la source de lumière à DEL (21) étant de préférence lisse, formant en particulier une surface extérieure lisse de la lampe (100) .

15. Lampe médicale selon l'une des revendications précédentes,
**caractérisée**
**en ce que** la structure de lentille de la vitre de protection (50) présente une zone intérieure (52) ainsi qu'une zone extérieure (56),
• les lentilles (53) de la zone intérieure (52) étant conçues pour projeter la lumière émise par la zone centrale (42) du collimateur (40) sous la forme d'un champ lumineux central sur le plan objet (O), et
• les lentilles (58) de la zone extérieure (56) sont conçues pour projeter la lumière émise par la zone extérieure (46) du collimateur (40) sous la forme d'un champ lumineux extérieur sur le plan objet (O),
et le champ lumineux central et le champ lumineux extérieur se superposant sensiblement complètement,
chaque lentille individuelle (53, 58) de la zone intérieure ou extérieure (52, 56) projetant de préférence entièrement le champ lumineux central ou extérieur correspondant.

16. Lampe médicale selon la revendication 15,
**caractérisée**
**en ce que** les lentilles (53) de la zone intérieure (52) sont sensiblement carrées et les lentilles (58) de la zone extérieure (56) présentent, dans la direction d'un axe (I2) du collimateur (40) qui est perpendiculaire à la direction de l'élargissement asymétrique, une plus grande extension que selon un axe (I1) du collimateur (40) s'étendant parallèlement à la direction de l'élargissement asymétrique.
